# EUROPÄISCHE PATENTSCHRIFT

(11) **EP 3 747 393 B1**
(45) Veröffentlichungstag und Bekanntmachung des Hinweises auf die Patenterteilung: **05.10.2022**
(21) Anmeldenummer: 20178065.7
(22) Anmeldetag: 03.06.2020
(51) Int. Cl.: A61C 7/10

(54) **ORTHODONTISCHE DEHNSCHRAUBE**
ORTHODONTIC EXPANSION SCREW
VIS D'EXTENSION ORTHODONTIQUE

(30) Priorität: 04.06.2019 DE 102019115019
(43) Veröffentlichungstag der Anmeldung: 09.12.2020
(73) Patentinhaber: Bernhard Förster GmbH, 75172 Pforzheim (DE)
(72) Erfinder: Regelmann, Michael, 75245 Neulingen (DE)
(74) Vertreter: Twelmeier Mommer & Partner

(56) Entgegenhaltungen:
- EP-A2- 2 184 029
- WO-A1-2012/120447
- DE-A1-102014 213 900
- DE-B4-102007 002 040

## Beschreibung

Die Erfindung geht von einer orthodontischen Dehnschraube mit den im Oberbegriff des Patentanspruchs 1 angegebenen Merkmalen aus. Eine solche Dehnschraube ist in der WO 2012/120447 A1 offenbart.

Eine ähnliche Dehnschraube ist in DE 10 2007 002 040 B4 offenbart. Zum Erschweren eines unbeabsichtigten Verdrehens der Spindel hat deren Betätigungsteil bei der bekannten Dehnschraube einen von der Kreisform abweichenden Außenquerschnitt. Ein Metallband drückt in radialer Richtung auf den Betätigungsteil und wirkt dadurch als Reibungsbremse für die Spindel, welche die Spindel in jenen Winkelstellungen hält, in welchen wegen der von der Kreisform abweichenden Gestalt des Betätigungsteils das Metallband den geringsten Abstand von der Längsachse der Spindel einnimmt. Das Metallband ist bei der bekannten Dehnschraube mit ihren Enden an den beiden Geradführungsmitteln befestigt, insbesondere mit ihnen verschweißt. Das Metallband bewirkt eine Hemmung der Spindel. Diese Art der Hemmung hat jedoch den Nachteil, ein gesondertes Bauteil zu erfordern, welches an den beiden Geradführungsmitteln befestigt werden muss, welche bei der bekannten Dehnschraube als zylindrische Stifte ausgebildet sind.

Aus der DE 10 2007 002 040 B4 ist es weiterhin bekannt, eine Hemmung dadurch zu verwirklichen, dass das Innengewinde des Dehnschraubenkörpers, in die ein Gewindeteil der Spindel eingreift, ein wenig verquetscht wird. Dadurch wird zwar ein gesondertes Bauteil vermieden, aber es ist nachteilig, dass sich das Ausmaß der auf diese Weise erzeugten Hemmung nur schwer reproduzieren lässt, so dass es innerhalb einer Serie von Dehnschrauben erhebliche Unterschiede in der Hemmung gibt.

Der vorliegenden Erfindung liegt die Aufgabe zugrunde, einen Weg aufzuzeigen, wie in einer orthodontischen Dehnschraube eine gut reproduzierbare Hemmung der Spindel in vorgegebenen Stellungen der Spindel verwirklicht werden kann, ohne dafür ein gesondertes Bauteil zu benötigen.

Diese Aufgabe wird durch eine orthodontische Dehnschraube mit den im Patentanspruch 1 angegebenen Merkmalen gelöst.

Vorteilhafte Weiterbildungen der Erfindung sind Gegenstand der abhängigen Ansprüche.

Eine erfindungsgemäße Lösung gemäß dem Patentanspruch 1 erreicht eine wohldefinierte Hemmung der Spindel ohne ein gesondertes Bauteil und vermeidet den für dessen Montage andernfalls anfallenden Aufwand. Die erfindungsgemäße Dehnschraube hat eine Spindel, deren Betätigungsteil eine Mantelfläche hat, deren Gestalt von der Mantelfläche eines Kreiszylinders in der Weise abweicht, dass der von der Längsachse der Spindel ausgehend gemessene Radius des Betätigungsteils der Spindel nicht konstant ist, sondern im Umfangsrichtung variiert, und zwar so, dass der Betätigungsteil im Verlauf einer vollen Umdrehung der Spindel unterschiedlich stark auf die beiden Führungsstifte drückt. Erfindungsgemäß wird dies zum Hemmen der Drehung der Spindel dadurch ausgenutzt, dass - verglichen mit dem Stand der Technik - der Abstand zwischen dem Betätigungsteil der Spindel und den beiden Führungsstiften soweit verringert wird, dass der Abschnitt des Betätigungsteils mit dem größten Radius an dem ihm zugewandten Führungsstift nur vorbeibewegt werden kann, indem er beim Drehen der Spindel auf den Führungsstift drückt und diesen beim Drehen von sich wegdrückt. Die dafür aufzuwendende Kraft verhindert oder erschwert das unabsichtliche Verdrehen der Spindel. Ist der Abschnitt des Betätigungsteils mit dem größten Radius an dem ihm zugewandten Führungsstift vorbeibewegt worden, dann ist dem Führungsstift ein Umfangsabschnitt des Betätigungsteils zugewandt, welcher einen kleineren Abstand von der Längsachse der Spindel hat, sodass der Führungsstift sich entspannen und seine elastische Biegung sich zurückbilden kann. Auf diese Weise durchläuft die Spindel, wenn man sie fortgesetzt dreht, abwechselnd eine erste Stellung, welche sie nur unter elastischer Verformung eines oder beider Führungsstifte einnehmen kann, und eine zweite Stellung, welche in dem Sinne "stabilisiert" ist, dass die Spindel diese zweite Stellung nur verlassen und in ihre erste Stellung gedreht werden kann, wenn sie mit einem Drehmoment beaufschlagt wird, welches groß genug ist, um einen oder beide Führungsstifte elastisch zu verformen. Die Bezeichnung der zweiten Stellung als "stabilisiert" soll nicht ausschließen, dass die Spindel in dieser Stellung um einen begrenzten Winkel gedreht werden kann, bevor sie beim Drehen durch ihre zunehmende Einwirkung auf einen oder beide Führungsstifte gehemmt wird.

Erfindungsgemäß sind am Umfang des Betätigungsteils der Spindel mehrere Wechsel zwischen größerem und kleinerem Abstand der Mantelfläche der Spindel von ihrer Längsachse vorgesehen.

Eine weitere erfindungsgemäße Lösung unterscheidet sich von der vorstehende beschriebenen Lösung darin, dass die Dehnschraube nur einen einzigen parallel zur Spindel verlaufenden Führungsstift hat, welcher im Zusammenwirken mit der Spindel eine Geradführung der beiden Dehnschraubenkörper bewirkt, wenn deren gegenseitiger Abstand durch Drehen der Spindel verändert wird.

Erfindungsgemäß weicht die Gestalt der Mantelfläche des Betätigungsteils der Spindel in der Weise von der Mantelfläche eines Kreiszylinders ab, dass die Mantelfläche des Betätigungsteils in der zweiten Stellung abgeflacht ist. Jedenfalls dann wenn jedem Führungsstift eine Abflachung der Spindel zugewandt ist, befindet sich die Spindel in einer stabilisierten Stellung.

Erfindungsgemäß weicht die Gestalt der Mantelfläche des Betätigungsteils in der Weise von der Mantelfläche eines Kreiszylinders ab, dass die Mantelfläche des Betätigungsteils an zwei einander diametral abgewandten Stellen abgeflacht ist. Dann kann die Spindel sowohl bei einer Dehnschraube mit zwei Führungsstiften als auch bei einer Dehnschraube mit nur einem Führungsstift jeweils um eine halbe Umdrehung von einer stabilisierten zweiten Stellung in die nächste stabilisierte zweite Stellung überführt werden. In einer anderen bevorzugten Ausführungsform weicht die Gestalt der Mantelfläche des Betätigungsteils in der Weise von der Mantelfläche eines Kreiszylinders ab, dass der Betätigungsteil der Spindel zur Bildung von vier stabilisierten zweiten Stellungen zwei Paare von einander diametral gegenüberliegenden Abflachungen aufweist, wobei die Paare von Abflachungen in Umfangsrichtung des Betätigungsteils um 90° gegeneinander versetzt sind. Auf diese Weise werden in jeder vollen Umdrehung der Spindel vier stabilisierte zweite Stellungen der Spindel ermöglicht, die um 90° gegeneinander versetzt sind.

Wenn die erfindungsgemäße Dehnschraube nur einen einzigen Führungsstift hat und die Spindel nur eine einzige Abflachung hat, dann nimmt die Spindel bei jeder vollen Umdrehung nur eine einzige stabilisierte zweite Stellung ein.

Es ist bekannt, im Betätigungsteil der Spindel zwei radial verlaufende Querbohrungen vorzusehen, welche sich unter einem rechten Winkel kreuzen oder schneiden. In diese Querbohrungen kann ein Stift eingeführt werden, mit dem sich die Spindel abschnittsweise drehen lässt. Diese Querbohrungen sind zweckmäßigerweise auch bei der erfindungsgemäßen Dehnschraube vorgesehen. Vorzugweise ist die Lage der Querbohrungen so gewählt, dass die Mündungen der Querbohrungen mindestens zu einem Teil, vorzugsweise vollständig, zwischen je zwei Abflachungen liegen. Vorzugsweise ist der Betätigungsteil der Spindel als ein Vierkant mit abgerundeten Kanten ausgebildet, wobei die Mündungen der Querbohrungen in den abgerundeten Kanten liegen. Die abgerundeten Kanten können die Kontur eines Kreisbogenabschnitts haben, dessen Radius den größten Radius des Betätigungsteils bildet.

Die Erfindung eignet sich besonders für Dehnschrauben, deren Spindel zwei Gewindeteile hat, welche sich vom Betätigungsteil ausgehend in einander gegengesetzte Richtungen erstrecken. Die Erfindung eignet sich aber auch für Dehnschrauben, in welchen die Spindel nur ein einziges vom Betätigungsteil ausgehendes Gewindeteil aufweist.

Es ist von Vorteil, dass die zum Verhindern oder Erschweren des Verdrehens der Spindel vorgesehene Einrichtung in beiden Drehrichtungen der Spindel wirksam ist. Sie eignet sich besonders für Dehnschrauben, welche zwei Führungsstifte haben, zwischen denen die Spindel angeordnet ist. Dabei liegen die Längsachsen der beiden Führungsstifte und der Spindel vorzugsweise in einer gemeinsamen Ebene. Die Erfindung eignet sich aber auch für Dehnschrauben, in denen neben der Spindel nur ein einziger Führungsstift vorgesehen ist, welcher im Zusammenwirken mit der Spindel ein Verdrehen der beiden Körper der Dehnschraube gegeneinander verhindert.

Die Führungsstifte der Dehnschraube sind zweckmäßigerweise zylindrisch ausgebildet. Grundsätzlich sind aber auch andere Querschnittsformen für die Führungsstifte möglich, z. B. quadratische oder rechtseckige Querschnitte. Zylindrische Führungsstifte sind aber für erfindungsgemäße Dehnschrauben besonders geeignet und begünstigen eine preiswerte Herstellung der Dehnschrauben.

Ausführungsbeispiele der erfindungsgemäßen Dehnschraube sind in den beigefügten Zeichnungen dargestellt. Gleiche oder einander entsprechende Teile der Dehnschrauben sind in den Ausführungsbeispielen mit übereinstimmenden Bezugszahlen bezeichnet.
- Figur 1: zeigt eine Dehnschraube in einer Draufsicht mit zwei Führungsstiften und einer Spindel mit zwei von einem Betätigungsteil ausgehenden Gewindeteilen, mit der Spindel in einer stabilisierten Stellung, wobei der Betätigungsteil vier Abflachungen aufweist;
- Figur 2: zeigt die Ansicht auf das in Figur 1 rechte Ende der Dehnschraube;
- Figur 3: zeigt den Schnitt A-A durch die in Figur 1 dargestellte Dehnschraube;
- Figur 4: zeigt die Spindel der Dehnschraube aus Figur 1 als Einzelteil in einer Draufsicht wie in Figur 1;
- Figur 5: zeigt die Ansicht auf das in Figur 4 rechte Ende der Spindel;
- Figur 6: zeigt die Ansicht auf das in Figur 4 linke Ende der Spindel;
- Figur 7: zeigt die Dehnschraube aus Figur 1 mit der Spindel in einer Stellung, in welcher sie, verglichen mit einer stabilisierten Stellung, um eine viertel Umdrehung vor oder zurück gedreht ist;
- Figur 8: zeigt die Ansicht auf das in Figur 7 rechte Ende der Dehnschraube;
- Figur 9: zeigt den Schnitt A-A durch die Figur 7 dargestellte Dehnschraube;
- Figur 10: zeigt die Spindel der Dehnschraube aus Figur 7 als Einzelteil mit einer Draufsicht wie in Figur 7;
- Figur 11: zeigt die Ansicht auf das in Figur 10 rechte Ende der Spindel;
- Figur 12: zeigt die Ansicht auf das in Figur 10 linke Ende der Spindel; die
- Figuren 13 bis 24: zeigen in Darstellungen entsprechend den Figuren 1 bis 12 Dehnschrauben, die sich von der in den Figuren 1 bis 12 dargestellten Dehnschraube darin unterscheidet, dass der Betätigungsteil der Spindel nur zwei Abflachungen aufweist, welche einander diametral abgewandt sind;
- Figur 25: zeigt eine Dehnschraube mit nur einem Führungsstift in einer Draufsicht entsprechend der Figur 1 mit der Spindel in einer stabilisierten Stellung und mit einem Betätigungsteil 4, welches wie in Figur 1 vier Abflachungen aufweist;
- Figur 26: zeigt eine Ansicht auf das in Figur 25 untere Ende der Dehnschraube;
- Figur 27: zeigt den Schnitt A-A durch die in Figur 25 dargestellte Dehnschraube;
- Figur 28: zeigt die Spindel der Dehnschraube aus Figur 25 als Einzelteil in einer Draufsicht wie in Figur 25;
- Figur 29: zeigt die Ansicht auf das in Figur 28 untere Ende der Spindel;
- Figur 30: zeigt die Ansicht auf das in Figur 28 obere Ende der Spindel;
- Figur 31: zeigt die Dehnschraube aus Figur 25 mit der Spindel in einer Stellung, in welcher sie, verglichen mit einer stabilisierten Stellung, um eine viertel Umdrehung vor oder zurück gedreht ist;
- Figur 32: zeigt die Ansicht auf das in Figur 31 untere Ende der Dehnschraube;
- Figur 33: zeigt den Schnitt A-A durch die in Figur 31 dargestellte Dehnschraube;
- Figur 34: zeigt die Spindel der Dehnschraube aus Figur 31 als Einzelteil in einer Draufsicht wie in Figur 31;
- Figur 35: zeigt die Ansicht auf das in Figur 34 untere Ende der Spindel;
- Figur 36: zeigt die Ansicht auf das in Figur 34 obere Ende der Spindel;
- Figur 37: zeigt die Draufsicht auf eine Dehnschraube wie in Figur 25, jedoch mit nur zwei Abflachungen am Betätigungsteil der Spindel;
- Figur 38: zeigt die Ansicht auf das in Figur 37 untere Ende der Dehnschraube;
- Figur 39: zeigt den Schnitt A-A durch die in Figur 37 dargestellte Dehnschraube;
- Figur 40: zeigt die Spindel der Dehnschraube aus Figur 37 als Einzelteil in einer Draufsicht wie in Figur 37;
- Figur 41: zeigt die Ansicht auf das in Figur 40 untere Ende der Spindel;
- Figur 42: zeigt die Ansicht auf das in Figur 40 obere Ende der Spindel;
- Figur 43: zeigt die Dehnschraube aus Figur 37 mit der Spindel in einer Stellung, in welcher sie, verglichen mit einer stabilisierten Stellung, um eine viertel Umdrehung gedreht ist;
- Figur 44: zeigt die Ansicht auf das in Figur 43 untere Ende der Dehnschraube;
- Figur 45: zeigt die Ansicht auf das in Figur 43 obere Ende der Dehnschraube;
- Figur 46: zeigt die Spindel der Dehnschraube aus Figur 43 als Einzelteil in einer Draufsicht wie in Figur 43;
- Figur 47: zeigt die Ansicht auf das in Figur 46 untere Ende der Spindel, und
- Figur 48: zeigt die Ansicht auf das in Figur 46 obere Ende der Spindel.

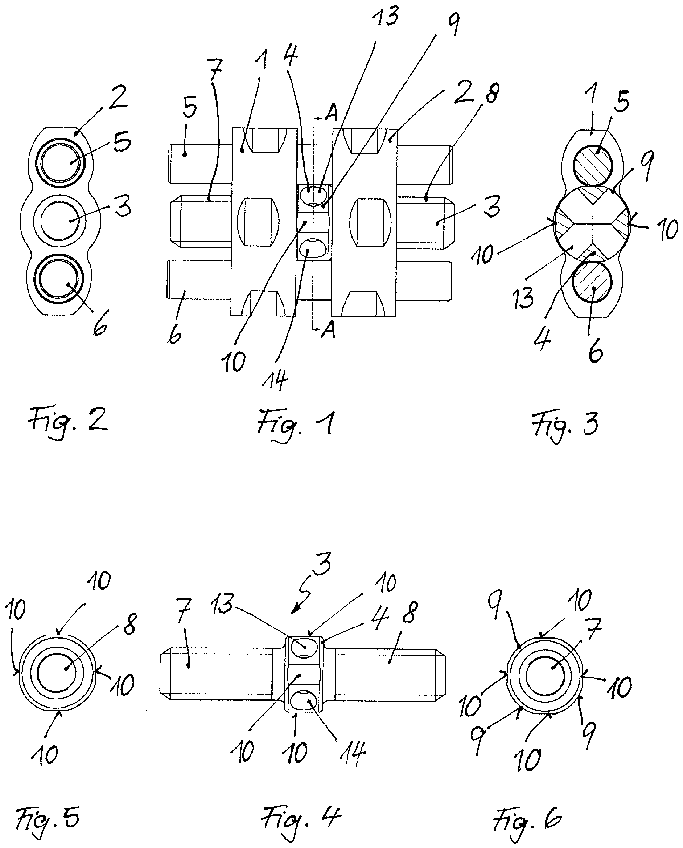

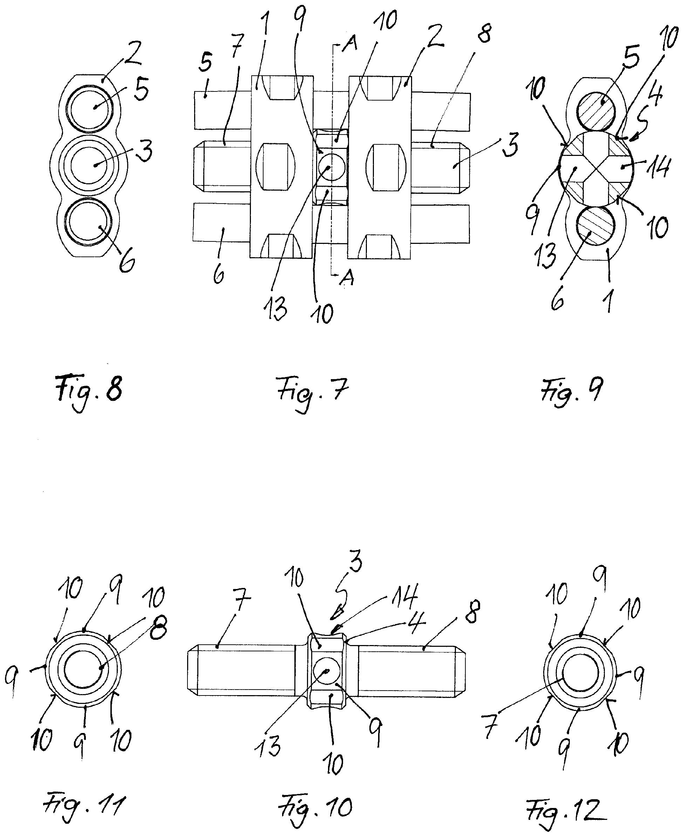

Die in den Figuren 1 bis 12 dargestellte Dehnschraube hat zwei vorzugsweise gleich ausgebildete Körper 1 und 2, deren gegenseitiger Abstand mittels einer Spindel 3 veränderbar ist, die mittig einen Betätigungsteil 4 hat, von welchem in einander entgegengesetzter Richtung zwei Gewindeteile 7, 8 mit entgegengesetztem Windungssinn ausgehen. Der erste Gewindeteil 7 ist im ersten Körper 1 und der zweite Gewindeteil 8 ist im zweiten Körper 2 drehbar gelagert. Zu diesem Zweck befindet sich in jedem der beiden Körper 1 und 2 eine durchgehende Gewindebohrung 11, in welche hinein jeweils einer der beiden Gewindeteile 7 und 8 gedreht ist. Dementsprechend fluchten die beiden Gewindebohrungen 11 miteinander und haben, den beiden Gewindeteilen 7 und 8 entsprechend, entgegengesetzten Windungssinn. Die Steigung der Gewinde auf den beiden Gewindeteilen 7 und 8 und in den Gewindebohrungen 11 stimmt überein.

Zu beiden Seiten der Spindel 3 sind zwei zylindrische Führungsstifte 5 und 6 vorgesehen, die parallel zueinander und parallel zur Spindel 3 verlaufen und in dazu passenden, paarweise miteinander fluchtenden, durchgehenden Bohrungen der beiden Körper 1 und 2 stecken. Die Führungsstifte 5 und 6 bilden Geradführungsmittel, welche die beiden Körper 1 und 2 unter Vermeidung einer Relativdrehung der beiden Körper 1 und 2 beim Verändern ihres gegenseitigen Abstands entlang zweier zueinander paralleler Führungsachsen führen.

In allen Ausführungsbeispielen hat der Betätigungsteil 4 zwei sich unter einem rechten Winkel schneidende Querbohrungen 13 und 14. Zum Drehen der Spindel 3 kann in die Querbohrungen 13 und 14 ein Verstellwerkzeug, beispielsweise ein Stift, eingeführt werden, den man als Hebel zum Drehen der Spindel 3 benutzen kann. Dreht man den Betätigungsteil 4, ändert sich der Abstand der beiden Körper 1 und 2, die dabei auf den Führungsstiften 5 und 6 gleiten, sodass die beiden Körper 1 und 2 gerade geführt werden und eine Relativdrehung der beiden Körper 1 und 2 gegeneinander verhindert wird.

Damit sich die Dehnschraube im Mund eines Patienten, dem sie für eine kieferorthopädische Behandlung eingesetzt wurde, nicht von selbst verstellt, ist in der Dehnschraube eine Einrichtung ausgebildet, welche ein unbeabsichtigtes Verdrehen der Spindel 3 relativ zu den beiden Körpern 1, 2 in beiden Drehrichtungen der Spindel 3 unter den im Mund auftretenden Einwirkungen auf die Dehnschraube verhindert oder wenigstens erschwert. Zu diesem Zweck hat der Betätigungsteil 4 eine Mantelfläche 9, die durch die vier Öffnungen der beiden Querbohrungen 13 und 14 unterbrochen ist. Zwischen den vier Öffnungen der Querbohrungen 13 und 14 ist der Betätigungsteil 4 abgeflacht ausgebildet, so dass im ersten Ausführungsbeispiel insgesamt vier Abflachungen 10 vorhanden sind. Zwischen den Öffnungen der Querbohrungen 13 und 14 und den Abflachungen 10 Mantelfläche 9 befindet sich ein Teil einer - von den Öffnungen der Querbohrungen 13 und 14 unterbrochenen - Zylindermantelfläche. Die Abflachungen 10 sind vorzugsweise eben ausgebildet. Sie können, wie in Figur 1 dargestellt, bis an den Rand der Querbohrungen 13 und 14 heranreichen, aber auch einen Abstand von diesen haben. Sie müssen nicht ebene Flächen sein, sondern können auch gewölbt sein, wobei der Durchmesser des Betätigungsteils 4 im Bereich der Abflachungen 10 jedenfalls kleiner zu sein hat als der Durchmesser des zylindrischen Teils der Mantelfläche 9 des Betätigungsteils 4.

Der Durchmesser des zylindrischen Teils der Mantelfläche 9 des Betätigungsteils 4 ist größer als der Abstand der beiden Führungsstifte 5 und 6 voneinander. Der zwischen den einander abgewandten Abflachungen 10 gemessene Durchmesser des Betätigungsteils 4 ist jedenfalls in Zentrum der Abflachungen 10 nicht größer als der Abstand der beiden Führungsstifte 5 und 6 voneinander, wenn diese sich in einem entspannten Zustand befinden, durch welchen die stabilisierten Stellungen der Spindel 3 gekennzeichnet sind.

Die Figuren 1 bis 3 zeigen die Dehnschraube mit der Spindel 3 in einer stabilisierten Stellung. Dabei handelt es sich im Sinne der Patentansprüche um die zweite Stellung der Spindel 3. In dieser zweiten Stellung sind zwei aneinander diametral abgewandte Abflachungen 10 den Führungsstiften 5 und 6 zugewandt. Da der gegenseitige Abstand der beiden einander abgewandten Abflachungen 10 in dieser Stellung nicht größer ist als der gegenseitige Abstand der beiden zylindrischen Führungsstifte 5 und 6 in ihrem entspannten Zustand, üben die Abflachungen 10 keine Kraft auf die Führungsstifte 5 und 6 aus. Vorzugsweise, liegen sie den beiden Führungsstiften 5 und 6 drucklos an. Beim Drehen der Spindel 3 rechts herum oder links herum gelangt zunehmend der Betätigungsteil 4 mit einem Abschnitt größeren Durchmessers in Berührung mit den beiden Führungsstiften 5 und 6, wodurch der Betätigungsteil 4 der Spindel 3 mit zunehmender Kraft auf die beiden Führungsstifte 5 und 6 einwirkt, welche ihr Maximum erreicht, wenn der Betätigungsteil 4 mit zylindrischen Abschnitten seinen Mantelfläche 9 die Führungsstifte 5 und 6 berührt und diese - wenn auch geringfügig - elastisch verformt. Diese Stellung ist im Sinne der Patentansprüche die "erste" Stellung der Spindel 3. Die Kraft, die erforderlich ist, um sie zu überwinden, ist durch die Wahl der Abmessungen des Betätigungsteils 4 und durch die Bemessung und Anordnung der Führungsstifte 5 und 6 bestimmt und so gewählt, dass ein ungewolltes Verstellen der Spindel 3 aus einer Sperrstellung in die nächste Sperrstellung verhindert oder zumindest erschwert wird.

Nach jeweils einer viertel Umdrehung gelangt die Spindel 3 der in den Figuren 1 bis 3 dargestellten Dehnschraube von einer "zweiten" Stellung, in welcher die Stellung der Spindel 3 stabilisiert ist, in die nächste "zweite" stabilisierte Stellung und überwindet dabei eine im Sinne der Patentansprüche "erste" Stellung, in welcher die Führungsstifte 5 und 6 mit einer elastischen Rückstellkraft auf den Betätigungsteil 4 drücken.

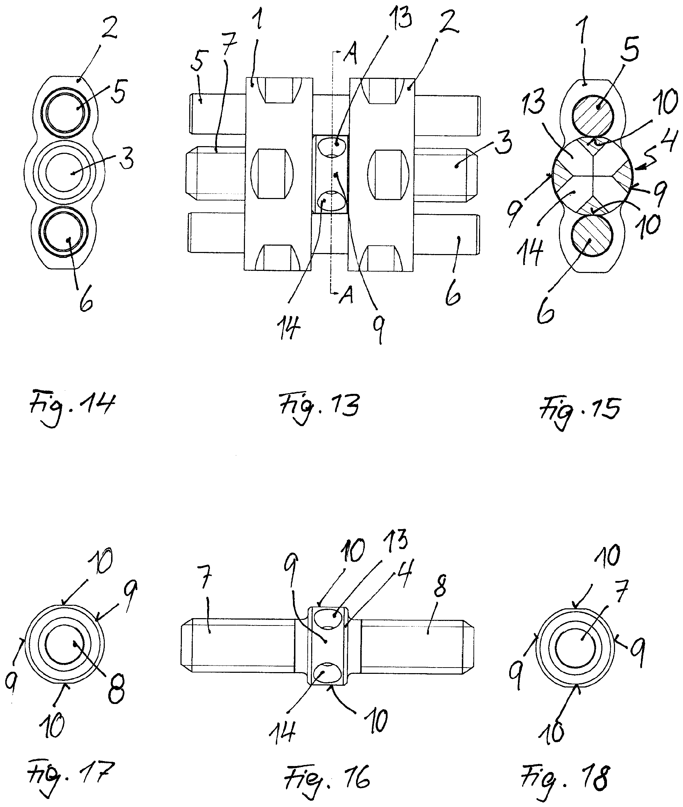

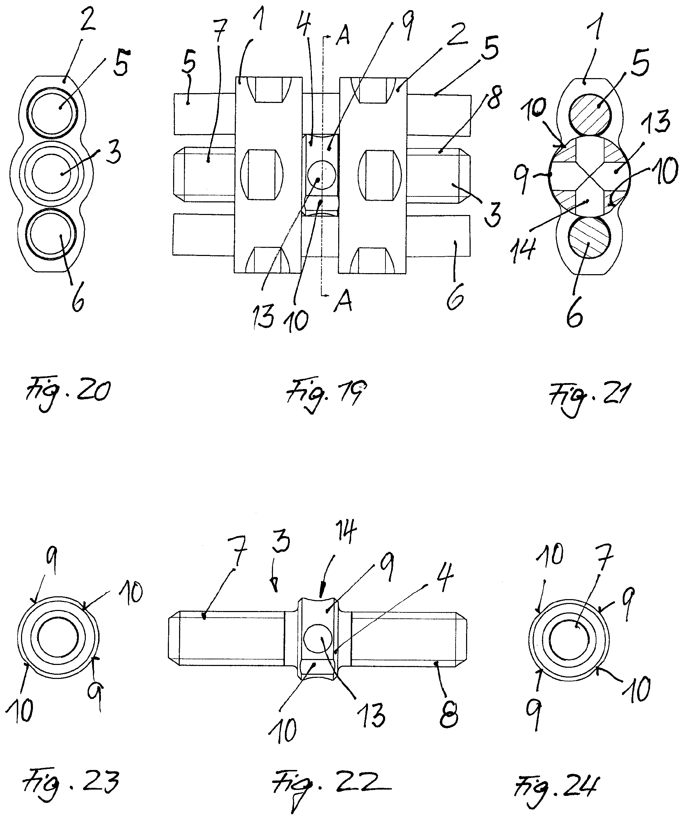

Das in den Figuren 13 bis 24 dargestellte zweite Ausführungsbeispiel der Dehnschraube unterscheidet sich von dem in den Figuren 1 bis 12 dargestellten ersten Ausführungsbeispiel darin, dass der Betätigungsteil 4 der Spindel 3 nur zwei einander diametral abgewandte Abflachungen 10 aufweist. Infolgedessen gibt es bei dieser Dehnschraube im Verlaufe einer jeden vollen Umdrehung der Spindel 3 nicht vier, sondern nur zwei "zweite" Stellungen, in welchen die Lage der Spindel 3 stabilisiert ist. Zwischen den beiden Abflachungen 10 hat der Betätigungsteil 4 der Spindel 3 eine Oberfläche, welche Teil einer zylindrischen Mantelfläche ist, der durch die Querbohrungen 13, 14 unterbrochen ist und sich über eine größeren Umfangswinkel erstreckt als im ersten Ausführungssbeispiel.

Nicht beide Führungsstifte 5 und 6 sind bei einer erfindungsgemäßen Dehnschraube zwingend vorhanden. Geeignete Geradführungsmittel können prinzipiell auch von der Spindel 3 selbst und einem einzigen, zur Spindel 3 parallelen Führungsstift 5 gebildet werden, jedoch sind Ausführungsformen mit zwei Führungsstiften 5, 6 wegen einer symmetrischen Krafteinleitung der von der Spindel 3 ausgehenden Kraft in die beiden Körper 1 und 2 bevorzugt.

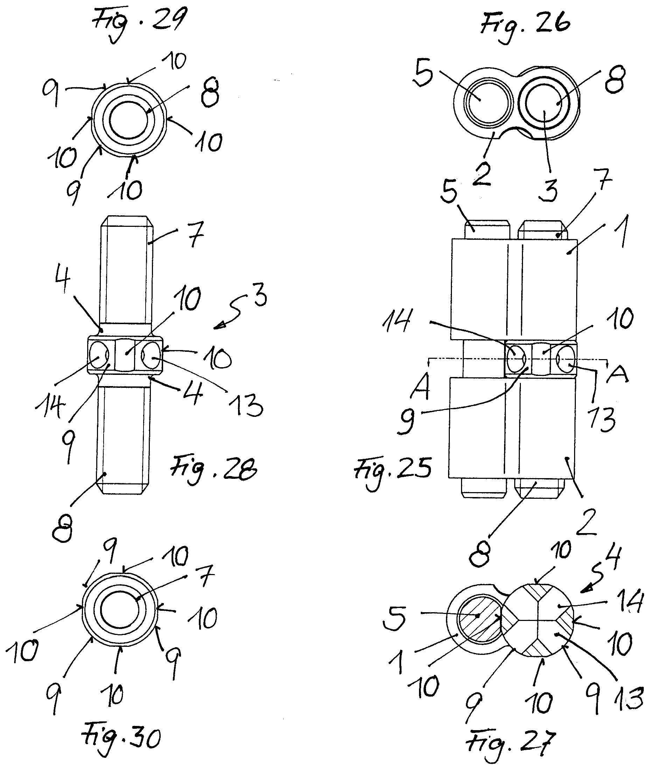

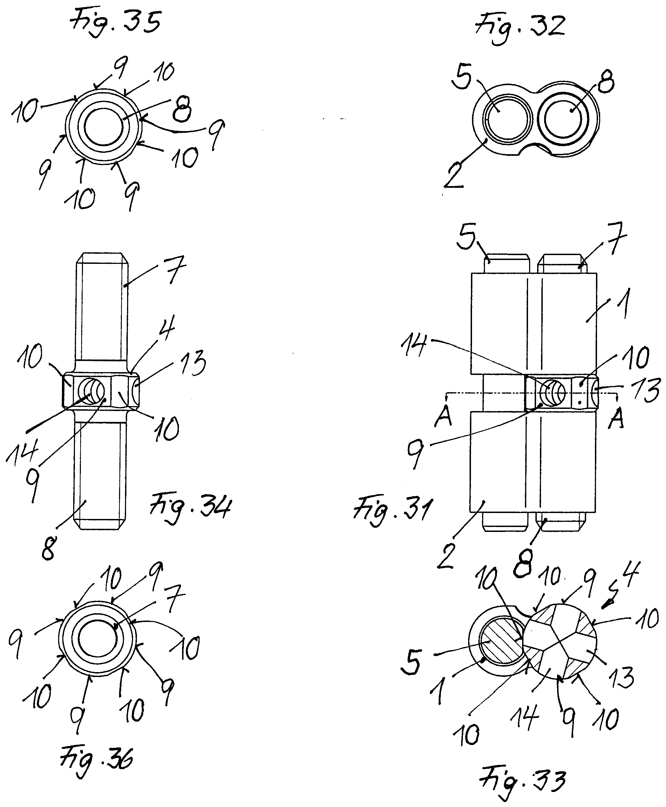

Das in den Figuren 25 bis 36 dargestellte dritte Ausführungsbeispiel der Dehnschraube unterscheidet sich von der in den Figuren 1 bis 12 dargestellten Dehnschraube darin, dass sie lediglich einen Führungsstift 5 hat. Die Geradführung der beiden Körper 1 und 2 beim Drehen der Spindel 3 erfolgt in diesem Fall durch Zusammenwirken der Spindel 3 mit dem einzigen Führungsstift 5. Wie im ersten Ausführungsbeispiel wird die Spindel 3, deren Betätigungsteil 4 vier Abflachungen 10 aufweist, durch jeweils eine viertel Drehung aus einer stabilisierten "zweiten" Stellung in die nächste stabilisierte "zweite" Stellung überführt, wobei die dabei zu überwindenden Kräfte gemeinsam vom Betätigungsteil 4 der Spindel 3 und dem einzigen Führungsstift 5 aufgenommen werden.

In diesem Beispiel sind die Körper 1 und 2 länger ausgebildet als im ersten und zweiten Ausführungsbeispiel, um für den Wegfall des einen Führungsstiftes einen die Geradführung verbessernden Ausgleich zu schaffen.

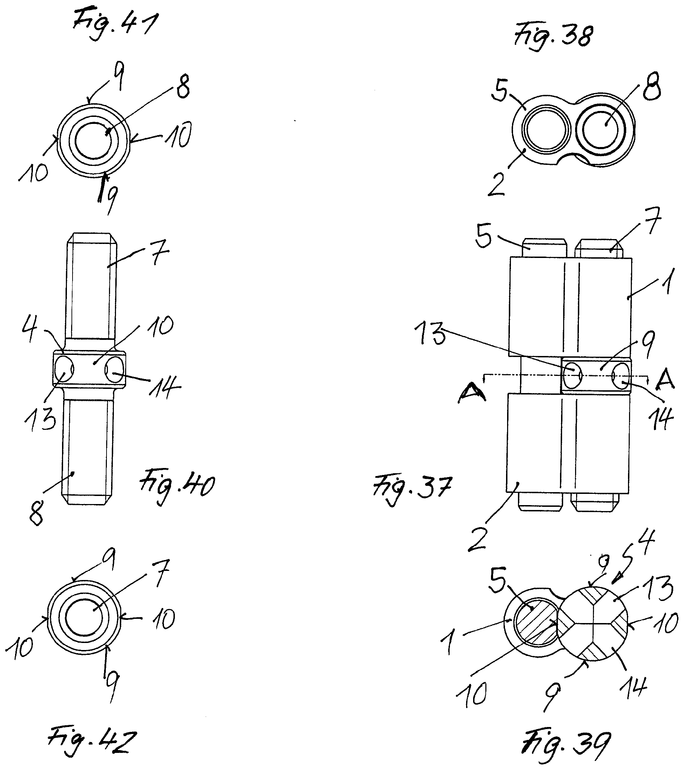

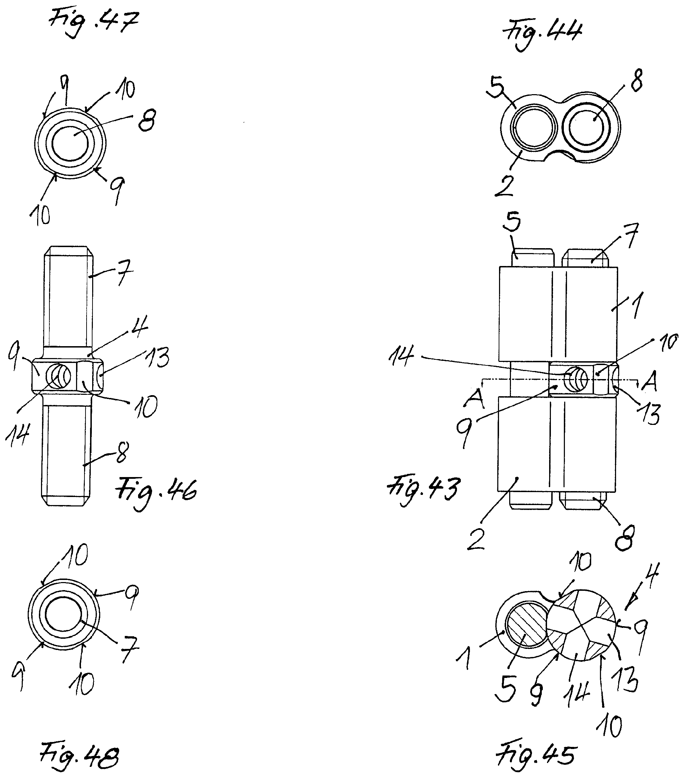

Das in den Figuren 37 bis 48 dargestellte vierte Ausführungsbeispiel unterscheidet sich von dem in den Figuren 25 bis 36 dargestellten dritten Ausführungsbeispiel nur darin, dass der Betätigungsteil 4 der Spindel 3 nur zwei einander diametral abgewandte Abflachungen aufweist ,sodass es im Verlauf einer vollen Umdrehung der Spindel 3 zwei Stellungen gibt, in denen die Lage der Spindel 3 stabilisiert ist.

Anstelle einer Spindel 3 mit zwei Gewindeteilen 7 und 8 kann in den erfindungsgemäßen Dehnschrauben eine Spindel mit nur einem einzigen Gewindeteil verwendet werden. In diesem Fall wird die Spindel nur in einem der beiden Körper in eine Gewindebohrung gedreht und mit dem anderen Körper der Dehnschraube drehbar, aber unverschieblich, verbunden, insbesondere dadurch, dass man den Betätigungsteil der Spindel drehbar in einer Kammer eines der beiden Körper der Dehnschraube lagert, aus welcher Kammer der einzige Gewindeteil der Spindel herausragt und in die Gewindebohrung des anderen Körpers der Dehnschraube gedreht ist.

### Bezugszeichenliste

- 1: Körper
- 2: Körper
- 3: Spindel
- 4: Betätigungsteil
- 5: Führungsstift
- 6: Führungsstift
- 7: erster Gewindeteil
- 8: zweiter Gewindeteil
- 9: Mantelfläche
- 10: Abflachung
- 11: Gewindebohrung
- 12: -
- 13: Querbohrung
- 14: Querbohrung

## Patentansprüche

1. Orthodontische Dehnschraube
mit wenigstens zwei Körpern (1, 2), deren gegenseitiger Abstand mittels einer Spindel (3) veränderbar ist, die an beiden Körpern (1, 2) angreift, wobei die Spindel (3) ein Betätigungsteil (4) aufweist, von welchem wenigstens ein Gewindeteil (7, 8) ausgeht, welcher in eine Gewindebohrung (11) in einem der beiden Körper (1, 2) gedreht ist, sodass die Spindel (3) und die Gewindebohrung (11) eine gemeinsame Längsachse haben,
mit wenigstens einem Führungsstift (5, 6), der mit den beiden Körpern (1, 2) in Eingriff steht und sie unter Vermeidung einer Relativdrehung der Körper (1, 2) beim Verändern ihres gegenseitigen Abstands führt, wobei die gemeinsame Längsachse parallel zu dem Führungsstift (5, 6) verläuft,
wobei zum Verhindern oder Erschweren eines unbeabsichtigten Verdrehens der Spindel (3) relativ zu den Körpern (1, 2) der Betätigungsteil (4) an seinem äußeren Umfang eine Mantelfläche (9) hat, deren Gestalt in der Weise von einer Mantelfläche eines Kreiszylinders abweicht, dass es wenigstens eine erste Stellung der Spindel (3) gibt, in welcher der Betätigungsteil (4) den Führungsstift (5, 6) mit einem Druck berührt, der zu einer elastischen Verformung des Führungsstifts (5, 6) führt, und dass es wenigstens eine zweite Stellung der Spindel (3) gibt, in welcher der Betätigungsteil (4) den Führungsstift (5, 6) nicht berührt oder ihn drucklos oder mit so geringem Druck berührt, dass kein Führungsstift (5, 6) verformt wird, wobei
die Gestalt der Mantelfläche (9) des Betätigungsteils (4) in der Weise von der Mantelfläche (9) eines Kreiszylinders abweicht, **dadurch gekennzeichnet dass** die Mantelfläche (9) des Betätigungsteils (4) zur Bildung von zwei zweiten Stellungen an zwei aneinander diametral abgewandten Stellen abgeflacht ist.

2. Orthodontische Dehnschraube nach Anspruch 1, **gekennzeichnet durch** zwei zueinander parallele Führungsstifte (5, 6), zwischen denen die Spindel (3) angeordnet ist.

3. Orthodontische Dehnschraube nach Anspruch 2, **dadurch gekennzeichnet, dass** in der ersten Stellung der Spindel (3) der Betätigungsteil (4) beide Führungsstifte (5, 6) mit einem Druck berührt, der zu einer elastischen Verformung der beiden Führungsstifte (5, 6) führt, und dass es wenigstens eine zweite Stellung der Spindel (3) gibt, in welcher der Betätigungsteil (4) die Führungsstifte (5, 6) nicht berührt oder sie drucklos oder mit so geringem Druck berührt, dass kein Führungsstift (5, 6) verformt wird.

4. Dehnschraube nach einem der vorstehenden Ansprüche, **dadurch gekennzeichnet, dass** die Gestalt der Mantelfläche (9) des Betätigungsteils (4) in der Weise von der Mantelfläche eines Kreiszylinders abweicht, dass die Mantelfläche (9) des Betätigungsteils (4) in der zweiten Stellung abgeflacht ist.

5. Dehnschraube nach einem vorstehenden Ansprüche, **dadurch gekennzeichnet dass** die Gestalt der Mantelfläche (9) des Betätigungsteils (4) in der Weise von der Mantelfläche eines Kreiszylinders abweicht, dass der Betätigungsteil (4) zur Bildung von vier zweiten Stellungen zwei Paare von einander diametral abgewandten Abflachungen (10) aufweist, wobei die Paare in Umfangsrichtung des Betätigungsteils (4) um 90° gegeneinander versetzt sind.

6. Dehnschraube nach einem der vorstehenden Ansprüche, **dadurch gekennzeichnet, dass** im Betätigungsteil (4) zwei radial verlaufende Querbohrungen (13, 14) vorgesehen sind, welche sich unter einem rechten Winkel kreuzen oder schneiden.

7. Dehnschraube nach Anspruch 6, **dadurch gekennzeichnet, dass** die Mündungen der Querbohrungen (13, 14) jeweils zwischen zwei Abflachungen (10) liegen.

8. Dehnschraube nach Anspruch 7, **dadurch gekennzeichnet, dass** der Betätigungsteil (4) als ein Vierkant mit kreisförmig gerundeten Kanten ausgebildet ist, wobei die Mündungen der Querbohrungen (13, 14) die kreisbogenförmig gerundeten Abschnitte (9) des Betätigungsteil (4) unterbrechen.

9. Dehnschraube nach einem der vorstehenden Ansprüche, **dadurch gekennzeichnet, dass** die Spindel (3) zwei Gewindeteile (7, 8) hat, welche sich vom Betätigungsteil (4) ausgehend in einander entgegengesetzte Richtungen erstrecken.

10. Dehnschraube nach einem der Ansprüche 1 bis 8, **dadurch gekennzeichnet, dass** die Spindel (3) nur ein einziges Gewindeteil hat, welches vom Betätigungsteil (4) ausgeht.

11. Dehnschraube nach einem der vorstehenden Ansprüche, **dadurch gekennzeichnet, dass** die zum Verhindern oder Erschweren eines ungewollten Drehens der Spindel (3) vorgesehene Einrichtung in beiden Drehrichtungen der Spindel (3) wirksam ist.

## Claims

1. An orthodontic expansion screw comprising
at least two bodies (1, 2) arranged at a mutual distance that can be changed by means of a spindle (3), which engages both bodies (1, 2), wherein the spindle (3) comprises an activating part (4), from which at least one threaded part (7, 8) proceeds into a threaded hole in one of the two bodies (1, 2), so that the spindle (3) and the threaded hole (11) have a shared longitudinal axis,
at least one guide pin (5, 6), which engages both bodies (1, 2) and guides them while preventing a relative rotation of the bodies (1, 2) upon a change in their distance relative to each other, wherein the shared longitudinal axis runs parallel to the guide pin (5, 6),
wherein in order to prevent or impede an inadvertent twisting of the spindle (3) relative to the bodies (1, 2), the outer periphery of the activating part (4) has a lateral surface (9), whose configuration differs from a lateral surface of a circular cylinder in such a way that there is at least one first position of the spindle (3) in which the activating part (4) contacts the guide pin (5, 6) with a pressure that causes an elastic deformation of the guide pin (5, 6), and that there is at least one second position of the spindle (3) in which the activating part (4) does not contact the guide pin (5, 6) or contacts them with no pressure or so little pressure that no guide pin (5, 6) is deformed, wherein the configuration of the lateral surface (9) of the activating part (4) differs from the lateral surface of a circular cylinder in such a way that **characterized in that**
the lateral surface (9) of the activating part (4) is flattened in two locations lying diametrically opposite each other in order to form two second positions.

2. The expansion screw according to claim 1, **characterized by** two guide pins (5, 6) parallel to each other between which the spindle (3) is arranged.

3. The expansion screw according to claim 2, **characterized in that** in the first position of the spindle (3) the activating part (4) contacts both guide pins (5, 6) with a pressure that causes an elastic deformation of both guide pins (5, 6), and that there is at least one second position of the spindle (3) in which the activating part (4) does not contact the guide pins (5, 6) or contacts them with no pressure or so little pressure that no guide pin (5, 6) is deformed

4. The expansion screw according to any one of the preceding claims, **characterized in that** the configuration of the lateral surface (9) of the activating part (4) differs from the lateral surface of a circular cylinder in such a way that the lateral surface (9) of the activating part (4) in the second position is flattened.

5. The expansion screw according to any one of the preceding claims, **characterized in that** the configuration of the lateral surface (9) of the activating part (4) differs from the lateral surface of a circular cylinder in such a way that the activating part (4) has two pairs of flattened regions (10) arranged diametrically opposite each other such that there are four second positions, wherein the pairs are offset relative to each other by 90° in the circumferential direction of the activating part (4).

6. The expansion screw according to any one of the preceding claims, **characterized in that** two radially running through holes (13, 14) are provided in the activating part (4), which cross or intersect each other at a right angle.

7. The expansion screw according to claim 6, **characterized in that** the through holes (13, 14) start and end between two flattened regions (10).

8. The expansion screw according to claim 7, **characterized in that** the activating part (4) is designed as a square with circularly rounded edges, wherein the through holes (13, 14) intersect the circularly rounded edges (9) of the activating part (4).

9. The expansion screw according to any one of the preceding claims, **characterized in that** the spindle (3) comprises two threaded parts (7, 8), which extend in opposite directions proceeding from the activating part (4).

10. The expansion screw according to any of claims 1 to 8, **characterized in that** the spindle (3) only has a single threaded part, which proceeds from the activating part (4).

11. The expansion screw according to any one of the preceding claims, **characterized in that** the arrangement for preventing or impeding inadvertent turning of the spindle is active for both rotational directions of the spindle.

## Revendications

1. Vis d'extension orthodontique,
pourvue d'au moins deux corps (1, 2), dont l'écart mutuel est variable au moyen d'une broche (3), qui s'engage sur les deux corps (1, 2), la broche (3) comportant une partie d'actionnement (4), à partir de laquelle part au moins une partie filetée (7, 8), laquelle est vissée dans un taraudage (11) dans l'un des deux corps (1, 2), de sorte que la broche (3) et le taraudage (11) aient un axe longitudinal commun,
pourvu d'au moins une goupille de guidage (5, 6), qui est en engagement avec les deux corps (1, 2) et qui les guide en évitant une rotation relative des corps (1, 2) lors de la variation de leur écart mutuel, l'axe longitudinal s'écoulant à la parallèle de la goupille de guidage (5, 6),
pour empêcher ou pour compliquer une torsion intempestive de la broche (3) par rapport aux corps (1, 2), la partie d'actionnement (4) possédant sur sa périphérie extérieure une surface d'enveloppe (9), dont la configuration diverge d'une surface d'enveloppe d'un cylindre circulaire, de la sorte qu'il existe au moins une première position de la broche (3), dans laquelle la partie d'actionnement (4) contacte la goupille de guidage (5, 6) avec une pression qui provoque une déformation élastique de la goupille de guidage (5, 6) et qu'il existe au moins une deuxième position de la broche (3), dans laquelle la partie d'actionnement (4) ne contacte pas la goupille de guidage (5, 6) ou la contacte sans la moindre pression ou avec une pression si faible, qu'aucune goupille de guidage (5, 6) ne soit déformée,
la configuration de la surface d'enveloppe (9) de la partie d'actionnement (4) étant divergente de la surface d'enveloppe (9) d'un cylindre circulaire de telle sorte, **caractérisée en ce que**, pour créer deux deuxièmes positions, la surface d'enveloppe (9) de la partie d'actionnement (4) est aplatie sur deux endroits diamétralement opposés.

2. Vis d'extension orthodontique selon la revendication 1, **caractérisée par** deux goupilles de guidage (5, 6) parallèles l'une à l'autre, entre lesquelles est placée la broche (3).

3. Vis d'extension orthodontique selon la revendication 2, **caractérisée en ce que** dans la première position de la broche (3), la partie d'actionnement (4) contacte les deux goupilles de guidage (5, 6) avec une pression qui provoque une déformation élastique des deux goupilles de guidage (5, 6) et **en ce qu'**il existe au moins une deuxième position de la broche (3), dans laquelle la partie d'actionnement (4) ne contacte pas les goupilles de guidage (5, 6) ou les contacte sans la moindre pression ou avec une pression si faible, qu'aucune goupille de guidage (5, 6) ne soit déformée.

4. Vis d'extension selon l'une quelconque des revendications précédentes, **caractérisée en ce que** la configuration de la surface d'enveloppe (9) de la partie d'actionnement (4) diverge de la surface d'enveloppe d'un cylindre circulaire de telle sorte, que la surface d'enveloppe (9) de la partie d'actionnement (4) soit aplatie dans la deuxième position.

5. Vis d'extension selon l'une quelconque des revendications précédentes, **caractérisée en ce que** la configuration de la surface d'enveloppe (9) de la partie d'actionnement (4) diverge de la surface d'enveloppe d'un cylindre circulaire de telle sorte, que pour créer quatre deuxièmes positions, la partie d'actionnement (4) comporte deux paires de méplats (10) diamétralement opposés, les paires étant décalées de 90° l'une par rapport à l'autre dans la direction périphérique de la partie d'actionnement (4).

6. Vis d'extension selon l'une quelconque des revendications précédentes, **caractérisée en ce que** dans la partie d'actionnement (4) sont prévus deux alésages transversaux (13, 14) s'écoulant en direction radiale, lesquels se croisent ou se recoupent sous un angle droit.

7. Vis d'extension selon la revendication 6, **caractérisée en ce que** les embouchures des alésages transversaux (13, 14) se situent chacune entre deux méplats (10).

8. Vis d'extension selon la revendication 7, **caractérisée en ce que** la partie d'actionnement (4) est conçue sous la forme d'un carré aux angles arrondis en cercle, les embouchures des alésages transversaux (13, 14) interrompant les segments (9) arrondis en arc de cercle de la partie d'actionnement (4).

9. Vis d'extension selon l'une quelconque des revendications précédentes, **caractérisée en ce que** la broche (3) possède deux parties filetées (7, 8), lesquelles s'étendent dans des directions opposées, en partant de la partie d'actionnement (4).

10. Vis d'extension selon l'une quelconque des revendications 1 à 8, **caractérisée en ce que** la broche (3) ne possède qu'une seule partie filetée, laquelle part de la partie d'actionnement (4).

11. Vis d'extension selon l'une quelconque des revendications précédentes, **caractérisée en ce que** le dispositif prévu pour empêcher ou pour compliquer une torsion intempestive de la broche (3) est actif dans les deux directions de rotation de la broche (3).
